# FASCICULE DE BREVET EUROPEEN

(11) **EP 3 206 502 B1**
(45) Date de publication et mention de la délivrance du brevet: **24.06.2020**
(21) Numéro de dépôt: 15791695.8
(22) Date de dépôt: 07.10.2015
(51) Int. Cl.: A23C 9/13, A23L 33/00, A23C 9/152, A23C 9/158, A23C 11/04, A23C 9/20

(54) **PROCEDE D'OBTENTION D'UN LAIT INFANTILE PRET A L'EMPLOI ET DE LONGUE CONSERVATION**
VERFAHREN ZUR HERSTELLUNG EINER GEBRAUCHSFERTIGEN FOLGEMILCH MIT LANGER HALTBARKEIT
METHOD FOR PRODUCING A READY-TO-USE, LONG-LIFE INFANT MILK

(30) Priorité: 13.10.2014 FR 1459786; 07.08.2015 FR 1557616
(43) Date de publication de la demande: 23.08.2017
(73) Titulaire: Even Santé Industrie, 29260 Lesneven (FR)
(72) Inventeur: LE PALUD, Jean-Marc, 29860 Plabennec (FR); RANC, Anne, 29440 Treflaouenan (FR); FOSSEUX, Anne, 29200 Brest (FR)
(74) Mandataire: IP Trust
(86) Numéro de dépôt international: PCT/FR2015/052688
(87) Numéro de publication internationale: WO 2016/059321

(56) Documents cités:
- WO-A1-97/35488
- FR-A1- 2 699 370
- US-A1- 2007 243 290

## Description

### Domaine de l'invention

La présente invention concerne le domaine de la préparation d'aliments lactés liquides pour nourrissons à partir de lait de vache ou d'autres mammifères, pour des formes liquides prêtes à l'emploi et de longue conservation, typiquement plus de 90 jours.

### Etat de la technique

Il est connu de l'art antérieur différents produits lactés pour nourrissons ainsi que leur procédé de fabrication.

Ces produits lactés sont destinés à se substituer partiellement ou totalement au lait maternel. Ces aliments doivent répondre à des contraintes particulières de formulation de par leur population de destination.

Les laits infantiles en poudre sont largement répandus. Cependant, les aliments lactés liquides prêt à l'emploi tendent à se développer. Ces derniers sont obtenus par des procédés complexes pour répondre aux spécificités de composition de ces produits. Ces aliments lactés sont généralement conservés à température ambiante après stérilisation.

On connaît par le brevet européen EP2465359 une composition nutritionnelle améliorée, spécialement pour les nourrissons, dotée de particules de gras particulières.

Ce brevet concerne un procédé de fabrication d'un produit laitier ou d'une formule nutritionnelle, telle qu'une formule pour bébés, qui présente une granulométrie de particules de graisse ressemblant à du lait maternel. Le procédé de l'invention consiste à mélanger des graisses végétales, des protéines et des glucides dans un mélangeur à rotor-stator à cisaillement élevé et à soumettre ensuite ledit mélange à une homogénéisation de façon à obtenir une composition présentant une granulométrie monomodale de particules de graisse et une faible proportion de particules de graisse en dessous de 1 µm. D'autres aspects de l'invention concernent le produit laitier ou la formule nutritionnelle proprement dite et l'utilisation dudit produit laitier ou de ladite formule nutritionnelle.

Le brevet FR2699370 porte sur un procédé pour la fabrication d'un lait infantile, longue conservation et anti-régurgitation, qui consiste:
- à préchauffer, puis à homogénéiser un lait infantile,
- puis à traiter ce lait à ultra haute température (UHT),
- enfin, à conditionner sous atmosphère aseptique en emballages stériles,
caractérisé en ce que avant l'étape d'homogénéisation, on introduit dans le lait de 0,3 à 1 %, calculé sur le poids du lait stérile emballé, d'un agent épaississant choisi dans le groupe comprenant la caroube, le guar, les carraghénanes et les pectines, seuls ou en mélange entre eux. L'invention concerne également le lait infantile ainsi obtenu, liquide notamment.

WO97/35488 A1 divulgue un procédé de préparation d'un lait infantile sous forme liquide comportant deux étapes d'homogénéisation sous pression.

### Inconvénients de l'art antérieur

Les solutions proposées dans l'art antérieur ne sont pas satisfaisantes car elles ne permettent pas d'atteindre une stabilité suffisante pour assurer une longue conservation. Les procédés connus dans l'art antérieur aboutissent à des compositions comprenant des composés qui ont tendance à sédimenter rapidement, ce qui ne permet pas de proposer des produits prêts à l'emploi de longue conservation.

### Solution apportée par l'invention

Afin de répondre à ces inconvénients, la présente invention concerne un procédé permettant de préparer des aliments liquides de haute stabilité, prêt à l'emploi. A cet effet, l'invention concerne selon son acception la plus générale un procédé de préparation d'un aliment lacté maternisé sous forme liquide prêt à l'emploi de longue conservation, comprenant les étapes suivantes :
- préparation dans deux réservoirs séparés d'une première phase constituée par une composition lactée et d'une deuxième phase grasse
- transfert de ladite première phase depuis le premier réservoir vers un réservoir d'équilibrage, par un conduit comportant une voie d'injection de ladite deuxième phase, ledit conduit comprenant des moyens d'homogénéisation entre la zone d'injection de la deuxième phase et le réservoir d'équilibrage pour former une pré-émulsion
- refroidissement de ladite pré-émulsion dans le réservoir d'équilibrage et maintien à une température comprise entre 5 et 10°C pendant une durée comprise entre 3 et 30H
- traitement de ladite préparation par stérilisation et par une seconde homogénéisation à une pression comprise entre 400 et 1500 bars
- conditionnement en milieu aseptique de la préparation ainsi obtenue.

L'on entend par longue conservation un produit qui se conserve au moins 90 jours. Cette conservation est conforme à la définition règlementairement admise de la Durée Limite d'Utilisation Optimale (DLUO) au sens de l'article R112-9 alinéa 5 du Code de la Consommation Française. Préférentiellement, le produit se conserve au moins 6 mois.

La double homogénéisation permet d'obtenir des gouttelettes lipidiques de quelques dixièmes de micromètres. La seconde homogénéisation haute pression permet d'augmenter la stabilité de la préparation. Dans un mode de réalisation, la seconde homogénéisation haute pression a lieu après la stérilisation et avant le conditionnement. L'on comprend que cette seconde homogénéisation peut aussi voir lieu avant la stérilisation.

Selon un premier mode de réalisation, le refroidissement de ladite pré-émulsion dans le réservoir d'équilibrage et le maintien à une température comprise entre 5 et 10°C dure entre 8 et 30H.

Selon un second mode de réalisation, le refroidissement de ladite pré-émulsion dans le réservoir d'équilibrage et le maintien à une température comprise entre 5 et 10°C dure entre 3 et 15H. Ce temps de refroidissement permet une meilleure tenue du produit dans le temps.

Avantageusement, le procédé comporte en outre une incorporation d'additifs alimentaires. Dans un mode de réalisation, cette incorporation est opérée dans la pré-émulsion.

Avantageusement, la stérilisation est réalisée à une température comprise entre 120 et 160°C.

Avantageusement, la pression de première homogénéisation est comprise entre 200 et 1500 bars, et la température de première homogénéisation est comprise entre 60 et 90°C.

Avantageusement, température de seconde homogénéisation est comprise entre 60 et 90°C.

Les compositions alimentaires obtenues par ce procédé, et permettant d'assurer une longue conservation sont également décrites.

Avantageusement, il est divulgué un aliment lacté maternisé sous forme liquide prêt à l'emploi de longue conservation obtenu par un procédé de préparation conforme au procédé précédemment décrit.

L'aliment lacté maternisé est conforme à la réglementation en vigueur et comprend les nutriments nécessaires et adaptés au développement infantile, tels que des glucides, des lipides, des protéines, des minéraux, des vitamines.

Selon un mode de réalisation, l'aliment lacté maternisé comporte des protéines de lait, une densité énergétique comprise entre 50 et 100 kcal/100 mL, un rapport calcium/phosphore supérieur à 1, il contient du calcium apporté par les protéines de lait et du calcium apporté par des formes minérales calciques selon un ratio forme insoluble/forme soluble supérieur ou égal à 45%/55% en poids desdites formes minérales calciques.

Préférentiellement, ce ratio forme insoluble / forme soluble est compris entre 55%/45% et 100%/0% en poids des formes minérales calciques ajoutées en plus du lait.

L'apport préférentiel sous forme insoluble du calcium, permet de limiter les interactions avec les protéines et confère ainsi une meilleure stabilité à l'aliment lacté maternisé.

L'on comprend que le calcium est apporté par deux sources : une source laitière et une source exogène ajoutée pour équilibrer la concentration en calcium de l'aliment lacté. Cette source exogène est apportée par des formes minérales calciques insolubles et solubles. Les formes insolubles peuvent être non limitativement du calcium phosphate, du carbonate de calcium, de l'hydroxyde de calcium, ou un mélange de ceux-ci ou de leurs dérivés. Les formes solubles peuvent être du chlorure de calcium ou du lactate de calcium ou un mélange de ceux-ci ou de leurs dérivés.

Ce même aliment lacté contient d'autres minéraux que le calcium, apportés par la source laitière, et/ou par des sources exogènes. Les apports minéraux exogènes totaux, c'est à dire l'ensemble des minéraux apportés hors protéines et calcium compris, se présentent sous formes insolubles et solubles selon un ratio forme insoluble / forme soluble préférentiellement inférieur ou égal à 45%/55% en poids desdites formes minérales exogènes. L'apport préférentiellement sous forme soluble des minéraux exogènes totaux améliore la stabilité de l'aliment lacté dans le temps et permet une meilleure homogénéité de l'aliment.

Les protéines de lait sont des protéines totales de lait et comportent par conséquent des caséines et des protéines sériques. Ces protéines de lait sont apportées par une source laitière préférentiellement liquide telle que du lait, du lait écrémé ou du rétentat d'ultrafiltration. Les protéines de lait peuvent néanmoins être apportées sous forme poudre par des isolats de protéines de lait, des concentrés de protéines de lait et/ou des hydrolysats de protéines de lait. Une source complémentaire de protéines sériques est apportée de préférence sous forme de poudre, par exemple par du lactosérum, des isolats de protéines de sérum, des hydrolysats de protéines sériques et/ou des concentrés de protéines de sérum.

L'ajout de protéines sériques modifie le ratio caséines/protéines sériques de sorte que le profil en acides aminés de l'aliment lacté maternisé soit le plus proche possible d'un lait maternel naturel.

Avantageusement, l'aliment lacté maternisé comporte des protéines sériques selon un ratio caséine / protéines sériques compris entre 35:65 et 65:35, l'aliment lacté comportant entre 1 et 4 g de protéines par 100 mL d'aliment.

Selon un autre mode particulier de réalisation, l'aliment lacté comporte du lactosérum déminéralisé.

Le lactosérum peut être apporté sous forme déminéralisée, voire fortement déminéralisée, l'apport en minéraux se faisant par supplémentation afin de mieux contrôler la quantité en différents minéraux nécessaires à l'alimentation infantile. Ceci permet d'obtenir un aliment infantile parfaitement standardisé en terme de profil minéral et dont la composition se rapproche étroitement d'un lait maternel naturel.

Avantageusement, l'aliment lacté maternisé comporte des matières grasses animales et des matières grasses végétales, les matières grasses animales comportant des matières grasses d'origine laitière, lesdites matières grasses d'origine laitière constituant entre 10 et 25% en poids de la matière grasse totale.

Les matières grasses végétales sont non limitativement choisies parmi les huiles de colza, de tournesol, de palme, d'algues, de microalgues, de champignons ou un mélange de celles-ci.

Les matières grasses animales sont choisies parmi l'huile de poisson et les matières grasses laitières, ou un mélange de celles-ci.

L'aliment lacté maternisé comporte également des émulsifiants adaptés aux émulsions huiles dans l'eau. Ils sont préférentiellement choisis parmi les esters d'acides gras, les mono et di-glycérides d'acides gras ou encore les lécithines. Les émulsifiants choisis auront de préférence un équilibre hydrophile/lipophile compris entre 8 et 20 sur le référentiel HLB.

Le lactose incorporé dans l'aliment lacté maternisé est préférentiellement apporté par un lactose intégralement hydrosoluble.

Dans un mode particulier de réalisation permettant d'obtenir un aliment lacté anti-régurgitation, l'aliment lacté contient des épaississants. Ces épaississants sont choisis parmi les carraghénanes, les farines de graines de caroube, les gommes, les pectines, les celluloses ou tout autre épaississant ou un mélange d'au moins deux parmi cette liste pouvant entrer dans une composition alimentaire lactée pour nourrissons. Ces épaississants peuvent aussi être choisis parmi l'agar-agar et/ou l'amidon.

L'aliment lacté maternisé est conditionné en briquette, en bouteille ou tout autre emballage. Préférentiellement, l'aliment lacté est conditionné en bouteille unidose prête à l'emploi.

Il est décrit encore une installation pour la préparation d'un tel aliment lacté. A ce titre, il est décrit une installation pour la préparation d'un aliment lacté maternisé sous forme liquide prêt à l'emploi de longue conservation, comprenant deux premiers réservoirs amont et un réservoir d'équilibrage relié à un premier réservoir amont par un conduit principal comportant une zone d'injection du contenu du second réservoir amont, ledit conduit principal comportant en outre un homogénéisateur entre la zone d'injection et le réservoir d'équilibrage, l'installation comportant en outre des moyens de refroidissement du réservoir d'équilibrage, un équipement de stérilisation, un second homogénéisateur à haute pression et une ligne de conditionnement stérile.

L'équipement de stérilisation peut être placé en amont ou en aval du second homogénéisateur. Dans un mode de réalisation, l'équipement de stérilisation est placé en amont du second homogénéisateur.

Selon une première variante, l'installation comporte des moyens de régulation du débit et de la température du flux entre le premier réservoir amont et le réservoir d'équilibrage d'une part, et le flux entre le second réservoir amont et le réservoir d'équilibrage d'autre part.

Selon une deuxième variante, l'installation comporte des moyens de régulation de la pression et de la température du flux entre le premier réservoir amont et le réservoir d'équilibrage d'une part, et le flux entre le second réservoir amont et le réservoir d'équilibrage d'autre part.

### Description

L'invention sera mieux comprise à la lumière de la description d'exemples non limitatifs de réalisation.

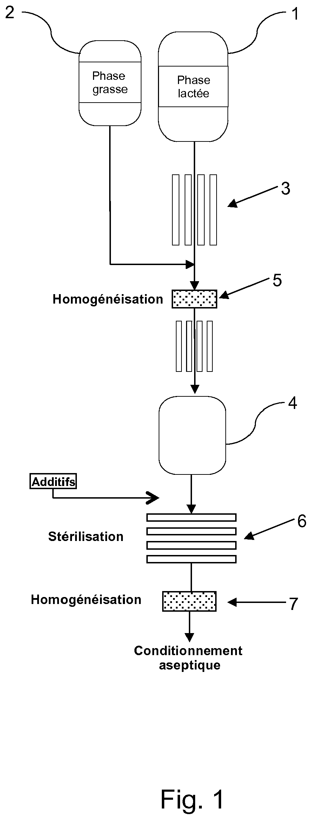

La figure 1 représente un diagramme du procédé selon l'invention.

### Exemple 1 : Fabrication d'un lait infantile conformément à l'invention :

L'exemple ci-dessous décrit l'invention pour un lot de 5000 kg.

Dans un premier réservoir (1), 1256 kg de lait écrémé sont mélangés à 3166 kg d'eau, 77,3 kg de protéines en poudre et du lactose à hauteur de 227 kg et d'autres additifs pour constituer une phase lactée. Ces additifs dans l'exemple décrit sont composés d'un mélange de minéraux et des fibres. Le tableau 1 présente la formule de la phase lactée. Cette phase lactée subit une pasteurisation dans un équipement adapté tel un pasteurisateur de type échangeur à plaques (3) bien connu de l'Homme du métier, à 77°C pendant moins d'une minute.

Dans un deuxième réservoir (2), 14,5 kg d'un émulsifiant, le mono & diglycérides d'acides gras, sont mélangés à 157 kg d'huiles végétales alimentaires pour constituer une phase grasse.

La phase lactée du premier réservoir (1) est transférée dans un troisième réservoir (4) d'équilibrage. Au cours de ce transfert, la phase grasse est injectée dans le tuyau d'acheminement de la phase lactée vers le réservoir d'équilibrage (4) pour obtenir une pré-émulsion. Cette injection est réalisée en ligne, par exemple à l'aide d'un mélangeur en ligne ou au niveau d'un homogénéisateur (5), à une température de 77°C à une pression de 200 bars. Cette étape constitue une première homogénéisation de la composition.

La pré-émulsion est ensuite mise au repos dans le réservoir d'équilibrage (4) pour une période de 8 à 30h.

A l'issue de cette étape, des additifs sont ajoutés à la composition, tels que non limitativement des vitamines, en qualité et en quantité conforme à la réglementation européenne des laits infantiles.

La composition est ensuite stérilisée (6) selon les procédés bien connus de l'Homme du métier, à une température d'au moins 134°C pendant 50 secondes. La composition est tout de suite refroidie à une température d'environ 80°C puis elle subit une deuxième étape d'homogénéisation, dans un homogénéisateur haute pression (7), à une pression de 500 bars et à une température de 80°C.

La composition stérile et homogénéisée est ensuite conditionnée en bouteille unidose de 90 mL prête à l'emploi.

La composition du lait infantile de cet exemple non limitatif de réalisation est résumée dans la table 1.

**Table 1. Composition d'un lait infantile selon l'invention**

| | kg / 5000 kg |
|---|---|
| Eau | 3166 |
| Lait écrémé | 1256 |
| Lactose | 227 |
| Mélange d'huiles végétales | 157 |
| Fibres solubles | 87 |
| Protéines de sérum | 77,3 |
| Emulsifiant | 14,5 |
| Minéraux | 7,2 |
| Taurine-Choline-Carnitine-Inositol | 5 |
| Vitamines | 2,6 |
| Nucléotides | 0,31 |

### Exemple 2 : exemples de formulations pour différents âges de laits infantiles conformément à l'invention :

Des laits infantiles pour quatre âges différents ont été formulés et obtenus avec le procédé conformément à l'invention :
- un lait prématuré pour un nourrisson prématuré, né au-delà de la 37^{e} semaine de grossesse
- un lait premier âge pour des nourrissons âgés de 0 à 6 mois (exemple 1)
- un lait de suite pour des nourrissons âgés de 6 à 12 mois
- un lait de croissance pour des bébés âgés de 1 à 3 ans

Ces aliments infantiles sont liquides, prêts à consommer, stables à température ambiante selon une DLUO de 12 mois. Ces aliments contiennent des protéines apportées par des protéines totales de lait et des protéines sériques.

Ces aliments infantiles sont fabriqués selon le procédé de l'exemple 1 selon l'invention avec une phase de mise au repos de la pré-émulsion dans le réservoir d'équilibrage de 3 à 15h.

La table 2 ci-dessous récapitule les profils nutritionnels de ces laits infantiles :

**Table 2. Profil nutritionnel de quatre exemples de réalisation de l'invention.**

| | | lait prématuré | lait premier âge | lait de suite | lait de croissance |
|---|---|---|---|---|---|
| | Unité | Pour 100ml | Pour 100ml | Pour 100ml | Pour 100ml |
| Energie | kcal | 80 | 65 | 65 | 65 |
| | kJ | 335 | 273 | 273 | 273 |
| Protéines | g | 2,7 | 1,5 | 2 | 2 |
| Ratio Caséines / Protéines sériques | | 40/60 | 40/60 | 60/40 | 53/47 |
| Lipides | g | 4,05 | 3,3 | 3,2 | 3,2 |
| Carbohydrates | g | 8,2 | 7,1 | 7 | 7 |
| Lactose | g | 6,6 | 7,1 | 7 | 7 |
| Fibres | g | peuvent être ajoutées | | | |
| Choline/Inositol/ Carnitine/ Taurine | mg | peuvent être ajoutés, et cela en conformité avec la réglementation européenne et les normes internationales, et selon les recommandations de l'ESPGHAN pour les laits prématurés | | | |
| Vitamines | µgRE | ajoutées en conformité avec la réglementation européenne et les normes internationales, et selon les recommandations de l'ESPGHAN pour les laits prématurés | | | |
| Nucléotides | mg | peuvent être ajoutés, et cela en conformité avec règlementation européenne et les normes internationales, et selon les recommandations de l'ESPGHAN pour les laits prématurés | | | |
| Minéraux et oligo éléments | mg | ajoutés en conformité avec la règlementation européenne et les normes internationales, et selon les recommandations de l'ESPGHAN pour les laits prématurés | | | |

Le lait premier âge de la table 2 correspond au profil nutritionnel pour 100 mL de l'exemple 1 de réalisation.

Le profil minéral et en vitamines de ces aliments est adapté en fonction de l'âge du nourrisson. Pour les prématurés et les nourrissons jusqu'à 6 mois, ce profil est complet de sorte que les laits puissent être utilisés comme seule source d'alimentation. Les laits pour prématurés sont formulés selon les tolérances définies par la réglementation sur les Aliments Diététiques Destinés à des Fins Médicales Spéciales, et d'après les recommandations de l'ESPGHAN (European Society for Paediatric Gastroenterology Hepatology and Nutrition). Les laits premier âge et laits de suite sont formulés également selon la réglementation européenne et les normes internationales sur les laits infantiles.

Pour le lait de suite et de croissance, le profil est adapté à la diversification de l'alimentation du bébé.

Ces laits peuvent être enrichis en DHA (acide docosahexaénoïque) et ARA (acide arachidonique) conformément à la réglementation européenne et aux normes internationales sur les laits infantiles.

### Tests de stabilité du lait infantile de l'exemple 1 (lait premier âge)

La stabilité du lait infantile premier âge (exemple 1) a été suivie dans le temps et contrôlée selon deux tests. Le premier test a consisté en une observation dans le temps des produits selon des conditions normales de conservation (température ambiante de 20°C) et des conditions non optimales de conservation (température ambiante de 30°C). Le second test a consisté en une analyse de la stabilité physique des laits infantiles selon l'invention par une méthode accélérée.

### • Test d'observation :

Une partie des bouteilles de lait infantile précédemment obtenues ont été réparties en deux lots de douze bouteilles. Un lot de bouteilles a été placé à une température ambiante de 20°C, l'autre lot à une température ambiante de 30°C. Les bouteilles ont été contrôlées tous les mois. L'aspect du produit contenu dans les bouteilles a été contrôlé, principalement la couleur, le crémage et le dépôt au fond des bouteilles.

Avec les procédés et les formulations de l'art antérieur, les aliments infantiles présentent un crémage et un dépôt supérieur à 2 mm au bout de trois mois.

L'aliment infantile préparé conformément à l'invention, et notamment grâce à la double homogénéisation dont la deuxième homogénéisation est réalisée à haute pression permet d'éviter ces problèmes. En effet, au bout de 6 mois, aucun crémage n'a été observé dans les bouteilles à 20°C comme à 30°C. Un léger dépôt de 1 à 2 mm selon les bouteilles a été constaté. Les observations réalisées sur les deux lots sont répertoriées dans la table 3. Les laits infantiles ne présentaient toujours pas de crémage à 12 mois et des dépôts très faibles, satisfaisant les critères règlementaires pour une DLUO très longue.

**Table 3. Observations de la tenue du lait infantile dans le temps dans des bouteilles stockées à 20°C ou 30°C**

| Temps après fabrication | Observations à 20°C | Observations à 30°C |
|---|---|---|
| J + 3 jours | Couleur claire, homogène, bon goût | |
| J + 2 mois | Pas de crémage, dépôt 1 mm | Pas de crémage, pas de dépôt |
| J + 4 mois | Pas de crémage, dépôt 1 mm | Pas de crémage, dépôt 1 mm à 2 mm |
| J + 6 mois | Pas de crémage, dépôt 1 mm à 2 mm | Pas de crémage, dépôt 1 mm à 2 mm |
| J + 12 mois | Pas de crémage, dépôt 1 mm | Pas de crémage, dépôt 1 mm |

### • Analyse de la stabilité physique par méthode accélérée

Cette analyse consiste à accélérer le processus de vieillissement des laits infantiles afin de qualifier leur tenue dans le temps. Ce test repose sur la capacité des particules présentes dans le lait infantile, notamment de graisse, à se séparer selon leur densité. Des mesures de densité optique sont réalisées par transmission au cours du temps, permettant d'obtenir deux paramètres que sont l'indice d'instabilité et le pourcentage de sédiment.

L'indice d'instabilité est un nombre sans dimension représentant l'évolution en pourcentage de la transmission de l'échantillon entre le début de la centrifugation et à tout temps de la centrifugation. Le point 0% d'indice d'instabilité est défini par la mesure de la transmission de densité optique avant le début de la centrifugation.

La quantité de sédiment est exprimée en pourcentage du volume centrifugé.

Les laits infantiles précédemment préparés ont été centrifugés à 4000 rpm à 30°C pendant 2h. La densité optique au cours du temps a été mesurée par transmission, avant la centrifugation et tout au long de la centrifugation.

Les laits infantiles ont montré un indice d'instabilité de 0,3504 et un pourcentage de sédimentation de 3,93%. Comparativement, des laits infantiles préparés sans la double homogénéisation haute pression présentaient un indice d'instabilité de 0,437 en moyenne et un pourcentage de sédiment de 8,6% en moyenne.

Les laits infantiles préparés conformément à l'invention présentent donc une meilleure tenue dans le temps, ils se conservent donc mieux et plus longtemps, permettant d'obtenir une DLUO d'au moins 6 mois.

### Tests de stabilité des laits infantiles de suite et de croissance

La stabilité des laits infantiles de suite et de croissance a été suivie dans le temps et contrôlée par un test d'observation dans le temps des produits selon des conditions normales de conservation (température ambiante de 20°C) et des conditions non optimales de conservation (température ambiante de 30°C) .

Une partie des bouteilles de lait infantile de suite et de croissance préparés selon l'invention ont été réparties en deux lots de douze bouteilles. Un lot de bouteilles a été placé à une température ambiante de 20°C, l'autre lot à une température ambiante de 30°C. Les bouteilles ont été contrôlées tous les mois. L'aspect du produit contenu dans les bouteilles a été contrôlé, principalement la couleur, le crémage et le dépôt au fond des bouteilles.

Avec les procédés et les formulations de l'art antérieur, les aliments infantiles présentent un crémage et un dépôt supérieur à 2 mm au bout de trois mois.

Les laits infantiles préparés conformément à l'invention, et notamment grâce à la double homogénéisation dont la deuxième homogénéisation est réalisée à haute pression permet d'éviter ces problèmes.

Pour le lait de suite, à 20°C, aucun crémage n'a été observé jusqu'à au moins 15 mois de garde. L'odeur et la couleur n'avaient pas évolué. A 30°C, un léger crémage a été observé ainsi qu'une légère modification de couleur.

Pour le lait de croissance, à 20°C, quelques points de crème ont été observés à 6 et 9 mois. A 30°C, le lait n'a pas présenté de crémage, même au bout de 12 mois. Les autres paramètres organoleptiques étaient sensiblement constants à 20°C et à 30°C.

## Revendications

1. Procédé de préparation d'un aliment lacté maternisé sous forme liquide prêt à l'emploi de longue conservation, comprenant les étapes suivantes :
- préparation dans deux réservoirs séparés d'une première phase constituée par une composition lactée et d'une deuxième phase grasse
- transfert de ladite première phase depuis le premier réservoir vers un réservoir d'équilibrage, par un conduit comportant une voie d'injection de ladite deuxième phase, ledit conduit comprenant des moyens d'homogénéisation entre la zone d'injection de la deuxième phase et le réservoir d'équilibrage pour former une pré-émulsion
- refroidissement de ladite pré-émulsion dans le réservoir d'équilibrage et maintien à une température comprise entre 5 et 10°C pendant une durée comprise entre 3 et 30 heures
- traitement de ladite pré-mulsion équilibrée par stérilisation et par une seconde homogénéisation à une pression comprise entre 400 et 1500 bars
- conditionnement en milieu aseptique de l'aliment lacté maternisé ainsi obtenu.

2. Procédé selon la revendication 1 **caractérisé en ce que** le refroidissement de ladite pré-émulsion dans le réservoir d'équilibrage et le maintien à une température comprise entre 5 et 10°C dure entre 8 et 30 heures.

3. Procédé selon la revendication 1 **caractérisé en ce que** le refroidissement de ladite pré-émulsion dans le réservoir d'équilibrage et le maintien à une température comprise entre 5 et 10°C dure entre 3 et 15 heures.

4. Procédé selon l'une quelconque des revendications 1 à 3 **caractérisée en ce qu'**il comporte en outre une incorporation d'additifs alimentaires dans la pré-émulsion.

5. Procédé selon l'une quelconque des revendications 1 à 4 **caractérisé en ce que** la stérilisation est réalisée à une température comprise entre 120 et 160°C.

6. Procédé selon l'une quelconques des revendications 1 et 5 **caractérisé en ce que** la température de seconde homogénéisation est comprise entre 60 et 90°C.

## Patentansprüche

1. Verfahren zur Herstellung einer gebrauchsfertigen, haltbaren, flüssigen Säuglingsanfangsnahrung, umfassend die folgenden Schritte:
- Zubereiten, in zwei getrennten Behältern, einer ersten Phase, die aus einer Milchzusammensetzung besteht, und einer zweiten Fettphase,
- Übertragen der ersten Phase aus dem ersten Behälter in einen Ausgleichsbehälter durch eine Leitung, die einen Einleitungsweg für die zweite Phase aufweist, wobei die Leitung Homogenisierungsmittel zwischen dem Einleitungsbereich der zweiten Phase und dem Ausgleichsbehälter aufweist, um eine Voremulsion zu bilden,
- Abkühlen der Voremulsion im Ausgleichsbehälter und Halten der Voremulsion auf einer Temperatur zwischen 5 und 10 °C über einen Zeitraum von 3 bis 30 Stunden,
- Behandeln der ausgeglichenen Voremulsion durch Sterilisation und durch eine zweite Homogenisierung bei einem Druck zwischen 400 und 1500 bar,
- aseptisches Verpacken der so entstandenen Säuglingsanfangsnahrung.

2. Verfahren nach Anspruch 1, **dadurch gekennzeichnet, dass** das Abkühlen der Voremulsion im Ausgleichsbehälter und das Halten auf einer Temperatur zwischen 5 und 10 °C zwischen 8 und 30 Stunden dauert.

3. Verfahren nach Anspruch 1, **dadurch gekennzeichnet, dass** das Abkühlen der Voremulsion im Ausgleichsbehälter und das Halten auf einer Temperatur zwischen 5 und 10 °C zwischen 3 und 15 Stunden dauert.

4. Verfahren nach einem der Ansprüche 1 bis 3, **dadurch gekennzeichnet, dass** es ferner das Beimischen von Lebensmittelzusatzstoffen in die Voremulsion umfasst.

5. Verfahren nach einem der Ansprüche 1 bis 4, **dadurch gekennzeichnet, dass** die Sterilisation bei einer Temperatur zwischen 120 und 160 °C durchgeführt wird.

6. Verfahren nach einem der Ansprüche 1 und 5, **dadurch gekennzeichnet, dass** die Temperatur der zweiten Homogenisierung zwischen 60 und 90 °C liegt.

## Claims

1. Method for preparing a long-life, ready-to-use infant milk food in liquid form, said method comprising the following steps:
- preparing, in two separate tanks, a first phase consisting of a milk composition and a second fatty phase;
- transferring said first phase from the first tank to a balance tank, via a conduit comprising an injection path for said second phase, said conduit comprising homogenization means between the injection zone of the second phase and the balance tank for forming a pre-emulsion;
- cooling said pre-emulsion in the balance tank and maintaining at a temperature between 5 and 10°C for a period of between 3 and 30 hours;
- treating said balanced pre-emulsion by means of sterilization and by means of a second homogenization process at a pressure between 400 and 1500 bars;
- packaging the infant milk food obtained in this manner in an aseptic environment.

2. Method according to claim 1, **characterized in that** said pre-emulsion is cooled in the balance tank and maintained at a temperature of between 5 and 10°C for between 8 and 30 hours.

3. Method according to claim 1, **characterized in that** said pre-emulsion is cooled in the balance tank and maintained at a temperature of between 5 and 10°C for between 3 and 15 hours.

4. Method according to any of claims 1 to 3, **characterized in that** said method further comprises incorporating food additives into the pre-emulsion.

5. Method according to any of claims 1 to 4, **characterized in that** the sterilization is carried out at a temperature of between 120 and 160°C.

6. Method according to any of claims 1 and 5, **characterized in that** the temperature of the second homogenization process is between 60 and 90°C.
